(19) Europäisches Patentamt
European Patent Office
Office européen des brevets

(11) **EP 2 133 591 A1**

(12) **EUROPEAN PATENT APPLICATION**

(43) Date of publication:
**16.12.2009 Bulletin 2009/51**

(51) Int Cl.:
***F16G 13/04*** *(2006.01)*

(21) Application number: **09162290.2**

(22) Date of filing: **09.06.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **10.06.2008 JP 2008151319**

(71) Applicant: **Honda Motor Co., Ltd.**
**Minato-ku**
**Tokyo 107-8556 (JP)**

(72) Inventor: **FUJIWARA, Akira**
**Saitama 351-0193 (JP)**

(74) Representative: **Herzog, Markus et al**
**Weickmann & Weickmann**
**Patentanwälte**
**Postfach 86 08 20**
**81635 München (DE)**

(54) **Silent chain**

(57)    An object of the present invention is to provide a silent chain (1) which suppresses elongation and vibration more than the prior art silent chain. In order to achieve the above object, a silent chain (1) including a plurality of guide rows (6) having a pair of guide plates (4) at both ends of a pin (7), the guide plate (4) has two pin holes provided in a forward and backward driving direction, the pin (7) is fitted into each of the pin holes to be fixed; and a plurality of link rows (3) having at least two adjacent link plates (2), the link plate (2) has two pin holes provided in the forward and backward driving direction, is provided.

FIG.1A

3 LINK ROW    1 SILENT CHAIN    6 GUIDE ROW

LINK PLATE   LINK PLATE    GUIDE PLATE   LINK PLATE

7 PIN

## Description

FIELD OF THE INVENTION

The present invention relates to a silent chain used in, for example, an engine.

DESCRIPTION OF THE RELATED ART

In the prior art, the silent chain disclosed in JP 2006-300218 A is well known.

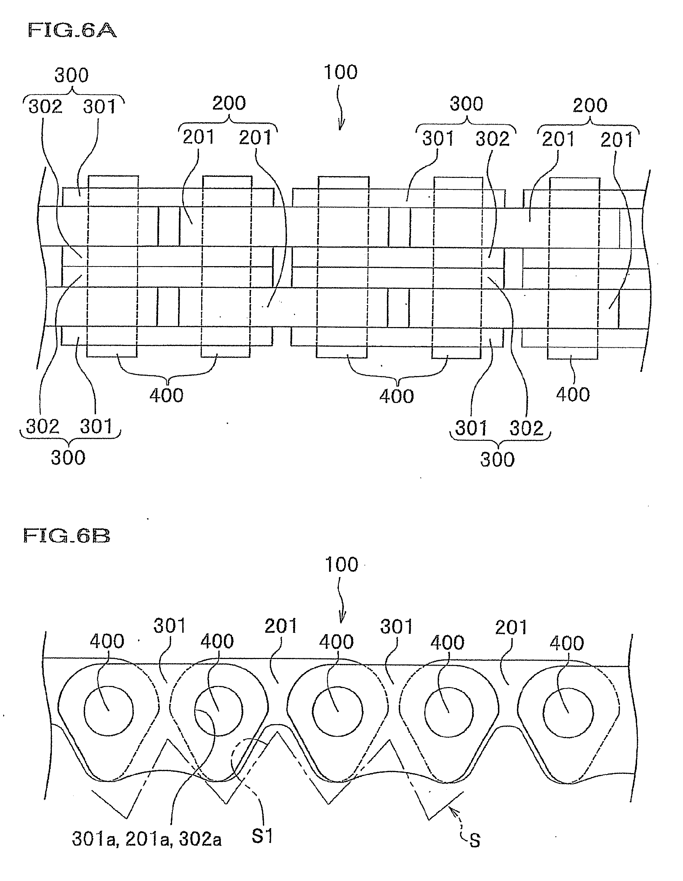

FIG. 6 is a plan view of a prior art silent chain. As shown in FIG. 6, the prior art silent chain 100 includes a plurality of link rows 200 having two link plates 201, and a plurality of guide row 300 having two guide plates 301 and two link plates 302, and the plurality of link rows 200 and the plurality of guide rows 300 are interlaced and interconnected via pins 400. And, in the prior art silent chain 100, guide plates 301 are placed on the outside of two link plates 201 respectively, and two link plates 302 are placed between two link plates 201.

In the prior art silent chain 100, by setting the number of the link plates 201 in the link row 200 to two (more particularly, two or less), an elongation of the link plate 201 in contact with the pins 400 is suppressed at an early stage in operation of the silent chain. Also, in the prior art silent chain 100, by setting the number of the link plates 302 in the guide row 300 to two (more particularly, two or more), when the link plate 302 engages with teeth S1 of a sprocket S, a collision energy is dispersed.

In recent years, however, as accuracy and complexity of an apparatus increases, suppression of elongation and vibration of the silent chain is more needed.

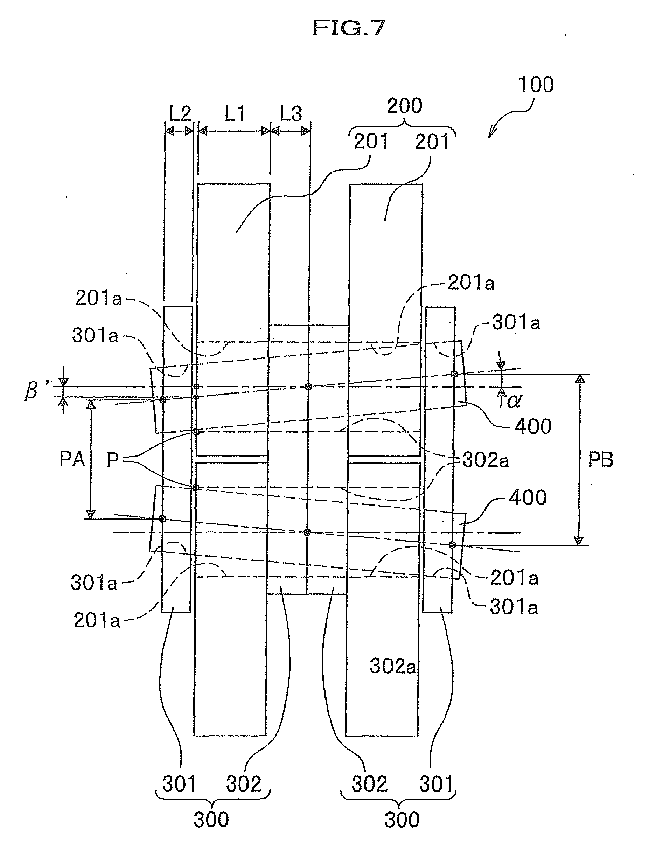

In the prior art silent chain 100, as shown in FIG. 7, the pins 400 are fitted into pin holes 301a of the guide plates 301 to be fixed, and the pins 400 are loosely fitted into pin holes 201a, 302a of the link plates 201, 302.

For this reason, for example, due to manufacturing error, when a spacing PB between two pin holes 301a of the guide plate 301 on the right side is greater than a spacing PA between two pin holes 301a of the guide plate 301 on the left side, the pin 400 is inclined by an angle $\alpha$ to a lateral direction of the silent chain 100, and the pin 400 may partially contact the pin hole 201a of the link plate 201 on the left side (more particularly, a point P near a left side opening of the pin hole 201a). When the pin 400 partially contacts the link plate 201 on the left side, the contact portion is worn by an inclined angle of the pin 400. As a result, the elongation and the vibration of the silent chain 100 is increased.

For reference's sake, the wear loss $\beta'$ is expressed as follows:

$$\beta' = (L1 + L3) * \tan \alpha \ \text{-----} \ (1),$$

where the thickness of the link plate 201 for the link row 200 is L1, the thickness of the link plate 302 for the guide row 300 is L3, and the inclined angle of the pin 400 is $\alpha$.

In view of the foregoing, an object of the present invention is to provide a silent chain which suppresses elongation and vibration more than the prior art silent chain.

SUMMARY OF THE INVENTION

A silent chain according to the present invention includes a plurality of guide rows having a pair of guide plates at both ends of a pin, the guide plate has two pin holes provided in a forward and backward driving direction, the pin is fitted into each of the pin holes to be fixed; and a plurality of link rows having at least two adjacent link plates, the link plate has two pin holes provided in the forward and backward driving direction, the pin is loosely fitted into each of the pin holes, in which the plurality of guide rows and the plurality of link rows are interlaced and interconnected via the pins, and the link plates for the link row are placed adjacent to the guide rows at locations equally spaced from an axial center location of the pin.

According to the above described silent chain, because at least two adjacent link plates are placed adjacent to the guide rows at locations equally spaced from the axial center location of the pin, even if an error occurs in a spacing between the pin holes of a pair of guide plates, a wear loss, which is generated in a time period from one link plate partially contacts the pin until another link plate contacts the pin, is decreased compared to the prior art. For this reason, a vibration of the link row in a rotation direction about the axial center location of the pin is prevented, and an elongation of the silent chain is suppressed.

Also, because the link row has at least two link plates, when teeth of the link row engage with teeth of the sprocket, a collision energy is dispersed to reduce a noise.

Also, at least two link plates for the link row are adjacent each other, and are loosely fitted about the pins through the pin holes, two link plates for the guide row are placed between the link plate for the link row and the guide plate respectively, the link plate for the guide row has two pin holes provided in the forward and backward driving direction, the pin is loosely fitted into each of the pin holes, and a stiffness of the guide row including the link plate for the guide row and the guide plate is preferably equal to or greater than that of the link row.

According to the above described silent chain, because the stiffness of the guide row including the link plate for the guide row and the guide plate is equal to or greater than that of the link row, the stiffness and a breaking strength of the guide row are increased compared to the prior art.

That is, when guide rows (the guide plate and the link plate for the guide row) are provided only at both ends of the chain in a lateral direction, if the stiffness of the guide row is less than that of the link row, and if the guide row at one end is deformed or broken, the chain results in a cantilevered condition, a concentrated load is applied on the guide row at another end, the link plate is deformed, an abnormal engagement occurs, and the chain may break or run off in a very short period of time. As a result, a driving force may not be transmitted, and a vehicle may not travel.

While, on the other hand, when the stiffness of the guide row is equal to or greater than that of the link row, if one link plate for the guide row or one guide plate for the guide row is deformed or broken, the silent chain itself is not broken in a short period of time. And, a noise caused by deformation and breaking allows a user to know an occurrence of abnormality in a transmission means of driving force promptly.

According to this structure, compared to the prior art silent chain in which the number of link plates for the guide row is increased to disperse the load and to improve the strength, a reliable silent chain driving means can be provided by using the minimum number of link plates for the guide row.

Also, a sum of the thicknesses of the guide plate for the guide row and the link plate for the guide row is preferably equal to or greater than that of link plates for the link row.

According to the above described silent chain, compared to the change in quality of material, or the increase in areas of the pin hole and an outer shape, the stiffness can be heightened at low cost, and each stiffness of the link row and the guide row can easily adjusted.

Also, oil grooves for communication between an outer surface of the link plate and the pin holes are preferably provided on at least one of adjacent surfaces of the two link plates for the link row.

According to the above described silent chain, because the oil grooves for communication between the outer surface of the link plate and the pin holes are provided on at least one of adjacent surfaces of the two link plates for the link row, a lubricating oil can be supplied to portions at which the pins slide within the pin holes of the link plate via the oil grooves. For this reason, wear and burnout between an inner surface of the pin hole of the link plate and the pin are suppressed, and a lifetime of the silent chain is extended.

Also, one end of the oil groove at the outer surface is preferably located at an anterior position in a driving direction to a position of another end of the oil groove at the pin hole.

According to the above described silent chain, because one opening of the oil groove at the outer surface is located at anterior position in a driving direction to the position of another opening of the oil groove at the pin hole, the lubricating oil can easily permeate into the oil groove. For this reason, wear and burnout between the inner surface of the pin hole of the link plate and the pin is more suppressed, and the lifetime of the silent chain is more extended.

Also, adjacent surfaces of two link plates for the link row are preferably formed into convexly curved faces which curve convexly from the outer surface of the link plate to the pin hole.

According to the above described silent chain, because adjacent surfaces of two link plates for the link row are formed into convexly curved faces which curve convexly from the outer surface of the link plate to the pin hole, the lubricating oil can easily permeate from the outer surface of the link plate to the pin hole, and wear and burnout between the pin and the inner surface of the pin hole are suppressed.

BRIEF DESCRIPTION OF THE DRAWINGS

The objects and features of the present invention will become more readily apparent from the following detailed description taken in conjunction with the accompanying drawings in which:

FIG. 1(A) is a plan view of a silent chain of the present invention;

FIG. 1(B) is a side view taken along the line I-I of FIG. 1(A);

FIG. 1(C) is an exploded perspective view of FIG. 1(A);

FIG. 2(A) is a side view of a link plate for a link row;

FIG. 2(B) is a side view of a guide plate;

FIG. 2(C) is a side view of a link plate for a guide row;

FIG. 3 is an enlarged plan view of a link row and a guide row in the silent chain;

FIG. 4(A) is a plan view of a silent chain of a second embodiment;

FIG. 4(B) is a side view taken along the line II-II of FIG. 4(A);

FIG. 4(C) is an exploded perspective view a link plate for a link row;

FIG. 5(A) is a plan view of a silent chain of the third embodiment;

FIG. 5(B) is a side view of a link plate for a link row;

FIG. 5(C) is a sectional view taken along the line III-III of FIG. 5(B);

FIG. 6 is a plan view of a prior art silent chain; and

FIG. 7 is an enlarged plan view of the prior art silent chain.

DETAILED DESCRIPTION OF THE INVENTION

Embodiments for carrying out the present invention are explained in more detail below with reference to the figures. In addition, same reference numbers are used to denote the same components, and their repeated explanations are omitted.

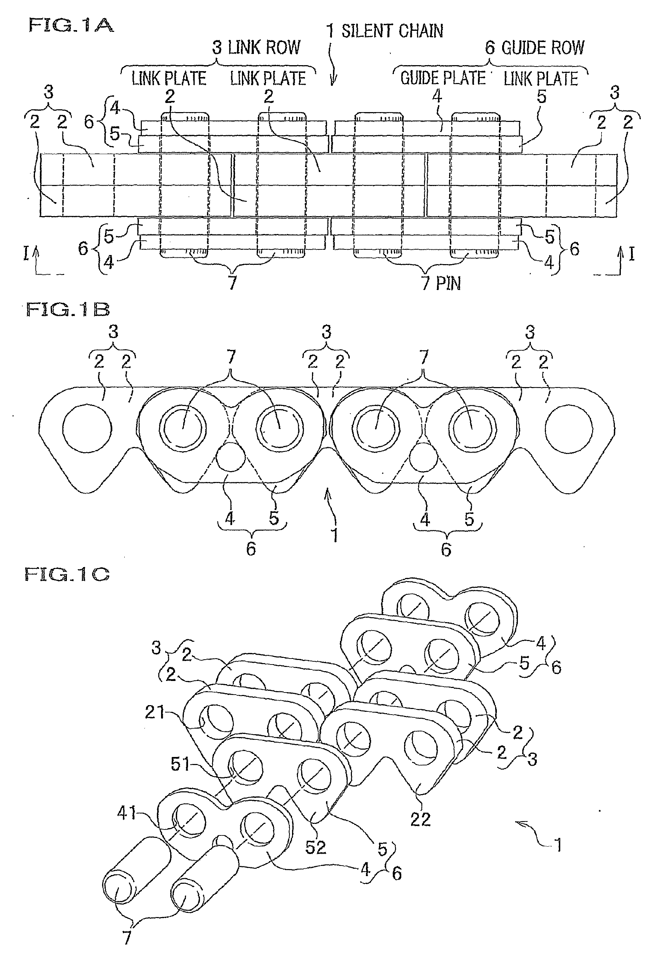

FIG. 1(A) is a plan view of a silent chain of the present invention; FIG. 1(B) is a side view taken along the line I-I of FIG. 1(A); and FIG. 1(C) is an exploded perspective view of FIG. 1(A).

The silent chain 1 is used, for example, in an internal combustion such as an engine, etc., and is utilized as a camshaft driving chain for connecting a crankshaft to a camshaft, or an oil pump driving chain for connecting a crankshaft to an oil pump.

As shown in FIG. 1, a silent chain 1 includes a link row 3 having two link plates 2; and a guide row 6 having two guide plates 4 and two link plates 5. The plurality of link rows 3 and the plurality of guide rows 6 are interlaced and interconnected via pins 7 endlessly.

Two link plates 2 for the link row 3 are adjacently placed across an axial center location of the pin 7.

Two guide plates 4 for the guide row 6 are placed at both ends of the pin 7. Also, two link plates 5 for the guide row 6 are placed between the link plate 2 for the link row 3 and the guide plate 4 for the guide row 6 respectively.

That is, two link plates 2 for the link row 3 are adjacent to the link plates 5 for the guide row 6 at locations equally spaced from the axial center location of the pin 7.

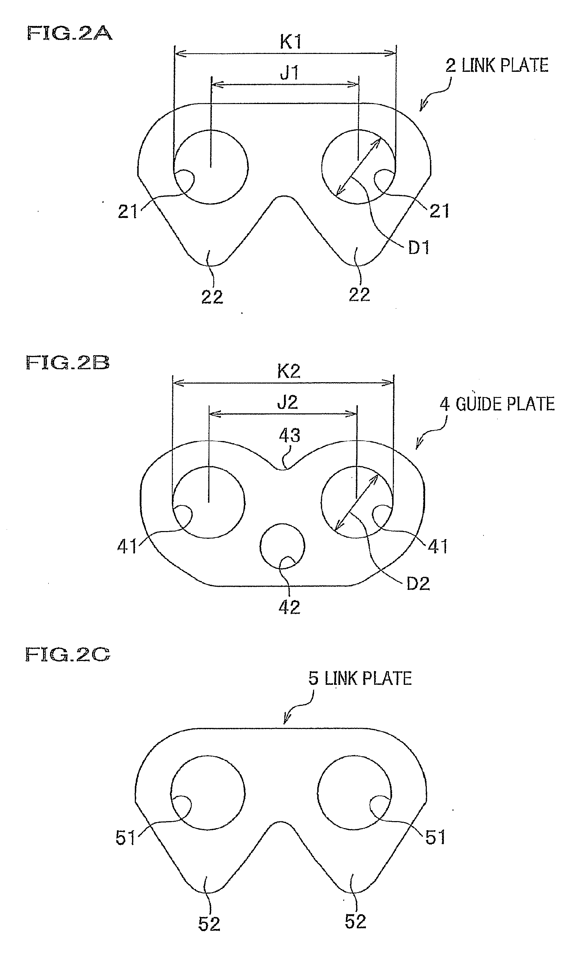

FIG. 2(A) is a side view of a link plate for a link row; FIG. 2(B) is a side view of a guide plate; and FIG. 2(C) is a side view of a link plate for a guide row.

As shown in FIG. 2(A), the link plate 2 for a link row 3 is, for example, a metallic plate, and has two pin holes 21 separated from each other in a forward and backward driving direction of the silent chain 1. An inner diameter of the pin hole 21 is formed to be slightly larger than an outer diameter of the pin 7, and the pin 7 is loosely fitted into the pin hole 21. On a portion of an outer surface of the link plate 2 (i.e., on the inside of the silent chain 1), two link teeth 22 are formed to engage with the teeth S1 of the sprocket S, and are separated from each other in the forward and backward driving direction of the silent chain 1 (see FIG. 6(B)).

Also, the link plate 2 for the link row 3 is wholly coated with a chromium carbide (CrC). The thickness of the chromium carbide is, for example, 12 micrometers.

For example, dimensions of each portion of the link plate 2 are as follows: the inner diameter D1 of the pin hole 21 is 3.96 millimeters, and the outer diameter of the pin 7 is 3.90 millimeters, which is smaller than D1. Also, a pitch J1 between center points of the pin holes 21 is 7.91 millimeters. Also, a pitch K1 from out to out of the pin holes 21 is 11.87 millimeters.

As shown in FIG. 2 (B), the guide plate 4 is, for example, a metallic plate, and has two pin holes 41 separated from each other in the forward and backward driving direction of the silent chain 1. An inner diameter of the pin holes 41 are formed to be slightly smaller than the outer diameter of the pin 7, and the pin 7 is fitted into the pin hole 41 to be fixed. Between two pin holes 41 of the guide plate 4, another through hole 42 is formed. On a portion of an outer surface of the guide plate 4 (i.e., on the outside of the silent chain 1), a recess 43 is formed between two pin holes 41.

For example, dimensions of each portion of the guide plate 4 are as follows: the inner diameter D2 of the pin hole 41 is 3.86 millimeters, and the outer diameter of the pin 7 is 3.90 millimeters, which is larger than D1. Also, a pitch J2 between center points of the pin holes 41 is 7.97 millimeters. Also, a pitch K2 from out to out of the pin holes 41 is 11.83 millimeters.

Due to manufacturing errors in the inner diameter D2 of the pin hole 41 of the guide plate 4, and pitches J1 and K1, the pin 7 may be fitted in an inclined state.

A link plate 5 for the guide row 6 has the same structure as that of the link plate 2 for the link row 3 except that the link plate 5 has a difference thickness, and is not coated. The link plate 5 for the guide row 6 has a smaller thickness than that of the link plate 2 for the link row (see FIG. 1 (A)).

As shown in FIG. 2(C), the link plate 5 for the guide row 6 is, for example, a metallic plate, and has two pin holes 51 separated from each other in the forward and backward driving direction of the silent chain 1. An inner diameter of the pin holes 51 are formed to be slightly larger than the outer diameter of the pin 7, and the pin 7 is loosely fitted into the pin hole 51. On a portion of an outer surface of the link plate 5 (i.e., on the inside of the silent chain 1), two link teeth 52 are formed to engage with the teeth S1 of the sprocket S, and are separated from each other in the forward and backward driving direction of the silent chain 1 (see FIG. 6(B)).

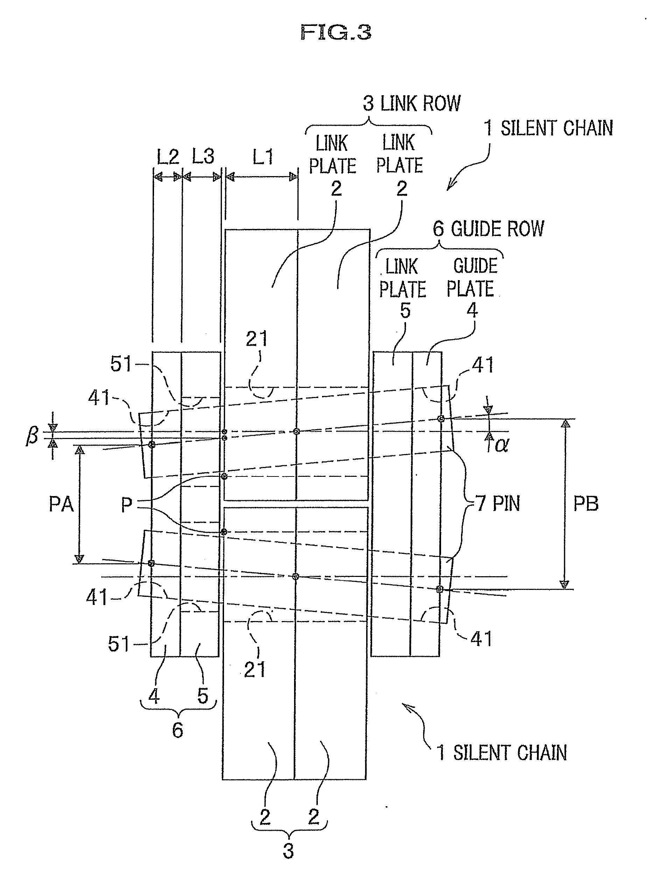

FIG. 3 is an enlarged plan view of a link row and a guide row in a silent chain.

In this embodiment, the sum of thickness of the guide plate 4 for the guide row 6 and the link plate 5 for the guide row 6 ((L2 + L3) * 2) is equal to or greater than that of the link plates 2 for the link row 3 (L1 * 2). To take an example, when the thickness L2 of the guide plate 4 for the guide row 6 is 1.30 millimeters, and the thickness L3 of the link plate 5 for the guide row 6 is 1.40 millimeters, the thickness L1 of the link plates 2 for the link row 3 is 2.63 millimeters.

In addition, the thickness L2 of the guide plate 4 for the guide row 6 may be 1.27 millimeters, the thickness L3 of the link plate 5 for the guide row 6 may be 1.37 millimeters, and the thickness L1 of the link plates 2 for the link row may be 2.60 millimeters.

Also, the thickness L2 of the guide plate 4 for the guide row may be 1.20 millimeters, the thickness L3 of the link plate 5 for the guide row 6 may be 1.40 millimeters, and the thickness L1 of the link plate 2 for the link row 3 may be 2.60 millimeters. In this case, the thickness of the guide row 6 is equal to that of the link row 3.

A stiffness of the guide row 6 including the guide plate 4 and the link plate 5 is equal to or greater than that of the link row 3 including two link plates 2.

Specifically, if the quality of material and a sum of thicknesses of the link row 3 are equal to those of the guide row 6, the stiffness of the link row 3 is equal to that of the guide row 6. Also, if the quality of material of the link row 3 is equal to that of the guide row 6, and if the sum of the thicknesses of the link row 3 is less than that of the guide row 6, the stiffness of the link row 3 is less than that of the guide row 6.

Next, referring to FIG. 3, an operation of this embodiment will be explained.

As shown in FIG. 3, due to manufacturing error, etc., when a spacing PA between the pin holes 41 of the guide plate 4 on the left side is less than a spacing PB between the pin holes 41 of the guide plate 4 on the right side, the pin 7 is inclined by an angle $\alpha$ to a lateral direction of the silent chain 1.

For this reason, in an inner surface of the pin hole 21 of the link plate 2 on the left side in FIG. 3, when the silent chain 1 is under a tension, the pin 7 partially contacts a point P near an opening of the pin hole 21 on the guide plate 4A side (i.e., on the left side in FIG. 3) at which the spacing between the pin holes 41 is shorter. And, the pin 7 is rubbed against the point P with the pin 7 and the point P partially contacted. As a result, until the inner surface of the pin hole 21 wholly contacts the pin 7, wear progresses.

At this time, because two link plates 2 are adjacently placed across an axial center location of the pin 7, the wear loss $\beta$ is expressed as follows:

$$\beta = L1 * \tan\alpha \ \text{-----} \ (2),$$

where the thickness of the link plate 2 (i.e., the distance between the center point of the silent chain 1 in the lateral direction and the point P) is L1.

On the other hand, in the prior art silent chain 100 shown in FIG. 7, because the link plate 302 for the guide row 300 is placed between two link plates 201 for the link row 200, the wear loss $\beta'$ is expressed as follows:

$$\beta' = (L1 + L3) * \tan\alpha \ \text{-----} \ (1),$$

where the thickness of the link plate 201 is L1, and the thickness of the link plate 302 is L3.

Therefore, comparing the silent chain 1 of this embodiment to the prior art silent chain 100, the wear loss is decreased by $\Delta\beta$ expressed as follows:

$$\triangle\beta = \beta - \beta' = L3 * \tan\alpha \ \text{-----} \ (3).$$

As described above, according to the silent chain 1 of this embodiment, the wear loss between the link plate 2 and the pin 7 can be decreased compared to the prior art. For this reason, a vibration of the link row 3 in a rotation direction about the axial center location of the pin 7 is prevented, and an elongation of the silent chain 1 is suppressed.

Also, because the link row 3 has at least two link plates 2, when teeth 22 of the link row 3 engage with teeth S1 of the sprocket S (see FIG. 6), a collision energy is dispersed to reduce a noise.

Also, because the stiffness of the guide row 6 including the link plate 5 and the guide plate 4 is equal to or greater than that of the link row 3, the stiffness and a breaking strength of the guide row 6 are increased compared to the prior art.

Also, by the above structure, if the link plate 5 for the guide row 6 or the guide plate 4 for the guide row 6 is deformed or broken, the silent chain 1 itself is not broken in a short period of time. And, a noise caused by deformation and breaking allows a user to know an occurrence of abnormality in the silent chain 1.

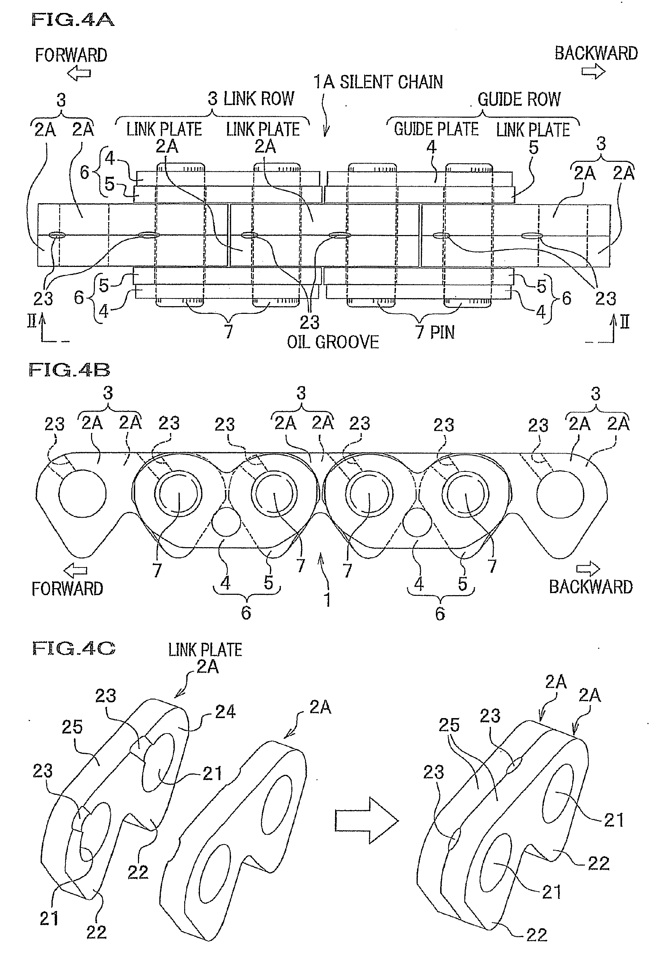

Next, referring to FIG. 4, a silent chain 1A of a second embodiment will be explained. In the explanation, same reference numbers are used to denote the same components as those of the first embodiment, and their repeated explanations are omitted.

FIG. 4(A) is a plan view of a silent chain of the second embodiment; FIG. 4(B) is a side view taken along the line II-II of FIG. 4(A); and FIG. 4(C) is an exploded perspective view of a link plate for a link row.

As shown in FIGS. 4(A) and 4(B), a silent chain 1A of the second embodiment differs from the silent chain 1 of the first embodiment in that a link plates 2A for the link row 3 has oil grooves 23.

As shown in FIG. 4(C), the oil groove 23 have semielliptical cross sections, and are formed on opposite side faces 24 of the link plates 2A respectively. The oil groove 23 are formed from an outer surface of the link plate 2A on the outside of the silent chain 1A (i.e., from an outer surface 25 opposite to the side on which link teeth 22 are formed) to an inner surface of the pin holes 21. Also, one end of the oil groove 23 at the outer surface 25 is located at an anterior position in a driving direction (i.e., left side in FIG. 4(B)) to a position of another end of the oil groove at the pin hole 21.

And, by placing the link plates 2A adjacently, oil feeding paths having elliptic cross sections are formed by the oil grooves 23, and the outer surface 25 of the link plate 2A communicates with the pin holes 21 via the oil grooves 23.

According to the silent chain 1A of the second embodiment, because the link plates 2A for the link row 3 have the oil grooves 23 on the adjacent side faces 24 respectively so that the outer surface 25 of the link plate 2A communicates with the pin holes 21, the lubricating oil can be supplied to portions at which the pins 7 slide within the pin holes 21 of the link plate 2A via the oil grooves 23. For this reason, wear and burnout between an inner surface of the pin hole 21 of the link plate 2A and the pin 7 are suppressed, and a lifetime of the silent chain 1A is extended.

Also, because one end of the oil groove 23 at the outer surface 25 is located at anterior position in a driving direction to the position of another end of the oil groove at the pin hole 21, the lubricating oil can easily permeate into the oil groove 23. For this reason, wear and burnout between the inner surface of the pin hole 21 of the link plate 2A and the pin 7 is more suppressed, and the lifetime of the silent chain 1A is more extended.

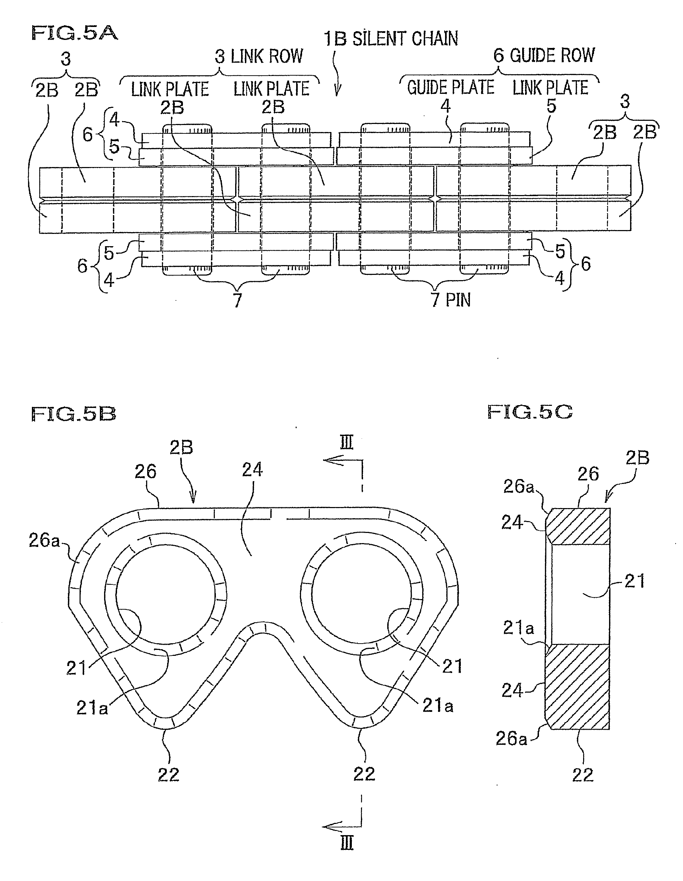

Next, referring to FIG. 5, a silent chain 1B of a third embodiment will be explained. In the explanation, same reference numbers are used to denote the same components as those of the first embodiment, and their repeated explanations are omitted.

FIG. 5(A) is a plan view of a silent chain of the third embodiment; FIG. 5(B) is a side view of a link plate for a link row; and FIG. 5(C) is a sectional view taken along the line III-III of FIG. 5(B).

As shown in FIGS. 5 (A)(B) and (C), the silent chain 1B of the third embodiment differs from the silent chain 1 of the first embodiment in that the adjacent side faces 24 of two link plates 2B for the link row 3 are formed into convexly curved faces from an outer surface 26 for a link plate 2B to the pin hole 21

More specifically, at a corner between the side face 24 of the link plate 2B and the pin hole 21, a taper 21a is formed. Also, at a corner between the side face 24 of the link plate 2B and the outer surface 26, a taper 26a is formed.

According to the above described silent chain, because the side faces 24 of two link plates 2B for the link row 3 are formed into convexly curved face which curve convexly from the outer surface 26 of the link plate 2B to the pin hole 21, the lubricating oil can easily permeate from the outer surface 26 of the link plate 2B to the pin hole 21, and wear and burnout between the pin 7 and the inner surface of the pin hole 21 are suppressed.

While the present invention has been described with reference to preferred embodiments thereof, it is to be understood that various changed and modifications may be made without departing from the spirit of the invention.

In the first embodiment, the quality of material of the link row 3 is equal to that of the guide row 6, and the sum of thicknesses of the link row 3 is less than (or equal to) that of the guide row 6. As a result, the stiffness of the link row 3 is less than (or equal to) that of the guide row 6. However, the present invention is not limited to this.

For example, the quality of material of the link row 3 may differ from that of the guide row 6. As a result, the stiffness of the link row 3 may be greater than that of the guide row 6. Also, each plate for the guide row 6 may be surface-treated.

Also, the pitch J2 of the pin holes 41 of the guide plate 4 may be greater than the pitch J1 of the pin holes 21 of the link plate 2. As a result, an area between the pin holes 41 is increased, an elongation between the pin holes 41 is decreased, and the stiffness of the guide plate 4 is increased.

Also, in the third embodiment, the side surfaces 24 of the link plate 2B are formed into convexly curved faces by forming tapers 21a and 25a. However, the present invention is not limited to this. For example, the side surfaces 24 of the link plate 2B may be formed into circular arc curved faces from the outer surface 26 of the link plate 2B to the pin hole 21.

An object of the present invention is to provide a silent chain which suppresses elongation and vibration more than the prior art silent chain. In order to achieve the above object, a silent chain including a plurality of guide rows having a pair of guide plates at both ends of a pin, the guide plate has two pin holes provided in a forward and backward driving direction, the pin is fitted into each of the pin holes to be fixed; and a plurality of link rows having at least two adjacent link plates, the link plate has two pin holes provided in the forward and backward driving direction, is provided.

**Claims**

1. A silent chain comprising:

   a plurality of guide rows having a pair of guide plates at both ends of a pin, the guide plate has two pin holes provided in a forward and backward driving direction, the pin is fitted into each of the pin holes to be fixed; and
   a plurality of link rows having at least two adjacent link plates, the link plate has two pin holes provided in the forward and backward driving direction, the pin is loosely fitted into each of the pin holes,

   wherein the plurality of guide rows and the plurality of link rows are interlaced and interconnected via the pins, and the link plates for the link row are placed adjacent to the guide rows at locations equally spaced from an axial center location of the pin.

2. The silent chain according to claim 1, wherein at least two link plates for the link row are adjacent each other, and are loosely fitted about the pins through the pin holes, two link plates for the guide row are placed between the link plate for the link row and the guide plate respectively, the link plate for the guide row has two pin holes provided in the forward and backward driving direction, the pin is loosely fitted into each of the pin holes, and a stiffness of the guide row including the link plate for the guide row and the guide plate is equal to or greater than that of the link row.

3. The silent chain according to claim 1 or 2, wherein a sum of the thicknesses of the guide plate for the guide row and the link plate for the guide row is equal to or greater than that of link plates for the link row.

4. The silent chain according to any one of claims 1 to 3, wherein oil grooves for communication between an outer surface of the link plate and the pin holes are provided on at least one of adjacent surfaces of the two link plates for the link row.

5. The silent chain according to claim 4, wherein one end of the oil groove at the outer surface is located at an anterior position in a driving direction to a position of another end of the oil groove at the pin hole.

6. The silent chain according to any one of claims 1 to 3, wherein adjacent surfaces of two link plates for the link row are formed into convexly curved faces which curve convexly from the outer surface of the link plate to the pin hole.

**FIG.1A**

**FIG.1B**

**FIG.1C**

FIG.2A

K1
J1
2 LINK PLATE
21
21
D1
22
22

FIG.2B

K2
J2
4 GUIDE PLATE
43
41
41
D2
42

FIG.2C

5 LINK PLATE
51
51
52
52

## FIG.3

## FIG.4A

FORWARD ⟵

BACKWARD ⟹

1A SILENT CHAIN

3 LINK ROW

GUIDE ROW

3

2A  2A

LINK PLATE 2A    LINK PLATE 2A

GUIDE PLATE 4    LINK PLATE 5

3

2A  2A

6 { 4 / 5

6 { 5 / 4

6 { 5 / 4

23

6 { 5 / 4

23

II    II

7

23

OIL GROOVE

7 PIN

## FIG.4B

23  3 2A 2A  23    23  3 2A 2A  23    23    23  3 2A 2A

7    4  5    7    1    7    4  5    7

6    6

FORWARD ⟵    BACKWARD ⟹

## FIG.4C

LINK PLATE
2A

23    24

25    2A

23    21

22

21    22

2A    2A

25  23

23    21

22

21

22

## FIG.5A

3

2B  2B

3 LINK ROW

1B SILENT CHAIN

6 GUIDE ROW

LINK PLATE    LINK PLATE

GUIDE PLATE    LINK PLATE

6 { 4
    5

2B          2B

4          5          3

2B  2B

5
6 { 5          7          7 PIN          5 } 6
    4                                    4

## FIG.5B

26          2B          24

26a

21

21a

22          22

III

III

## FIG.5C

2B

26a          26          2B

24

21

21a

24

26a

22

FIG.6A

300
302 301

200
201 201

100

300
301 302

200
201 201

400

400

400

302 301
300

301 302
300

FIG.6B

100

400    301    400    201    400    301    400    201    400

301a, 201a, 302a    S1

S

# FIG.7

| Europäisches Patentamt European Patent Office Office européen des brevets | **EUROPEAN SEARCH REPORT** | Application Number EP 09 16 2290 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 20 2006 002416 U1 (WINKLHOFER & SOEHNE GMBH [DE]) 28 June 2007 (2007-06-28) | 1 | INV. F16G13/04 |
| Y | * figure 9 * * paragraph [0049] - paragraph [0050] * ----- | 2-3 | |
| Y,D | JP 2006 300218 A (HONDA MOTOR CO LTD) 2 November 2006 (2006-11-02) * the whole document * ----- | 2-3 | |
| X | JP 03 020748 U (UNKNOWN) 28 February 1991 (1991-02-28) * figure 8 * ----- | 1 | |
| X | US 2004/166978 A1 (MATSUDA AKIO [JP] ET AL) 26 August 2004 (2004-08-26) * figure 5 * * paragraph [0042] - paragraph [0046] * ----- | 1 | |

| | TECHNICAL FIELDS SEARCHED (IPC) |
|---|---|
| | F16G |

~~The present search report has been drawn up for all claims~~

| Place of search | Date of completion of the search | Examiner |
|---|---|---|
| The Hague | 16 July 2009 | Das Neves, Nelson |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................

& : member of the same patent family, corresponding document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

2-3

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 09 16 2290

The Search Division considers that the present European patent application does not comply with the
requirements of unity of invention and relates to several inventions or groups of inventions, namely:

1. claims: 2-3(completely); 1(partially)

   Silent chain having guide rows stiffer than the link row
   ---

2. claims: 4-6(completely); 1(partially)

   Silent chain having a lubrication arrangement
   ---

**ANNEX TO THE EUROPEAN SEARCH REPORT
ON EUROPEAN PATENT APPLICATION NO.**

EP 09 16 2290

This annex lists the patent family members relating to the patent documents cited in the above-mentioned European search report.
The members are as contained in the European Patent Office EDP file on
The European Patent Office is in no way liable for these particulars which are merely given for the purpose of information.

16-07-2009

| Patent document cited in search report | Publication date | Patent family member(s) | | Publication date |
|---|---|---|---|---|
| DE 202006002416 U1 | 28-06-2007 | AT | 430274 T | 15-05-2009 |
| | | CN | 101421536 A | 29-04-2009 |
| | | EP | 1984648 A1 | 29-10-2008 |
| | | WO | 2007093202 A1 | 23-08-2007 |
| | | JP | 2009526952 T | 23-07-2009 |
| | | KR | 20080094948 A | 27-10-2008 |
| JP 2006300218 A | 02-11-2006 | NONE | | |
| JP 3020748 U | 28-02-1991 | NONE | | |
| US 2004166978 A1 | 26-08-2004 | NONE | | |

**EP 2 133 591 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006300218 A